# EUROPEAN PATENT APPLICATION

(11) **EP 4 124 479 A1**
(43) Date of publication of application: **01.02.2023**
(21) Application number: 21188696.5
(22) Date of filing: 30.07.2021
(51) Int. Cl.: B60G 17/0165, B60G 99/00, B62D 24/04, F16F 13/30, B62D 33/06, F16F 9/53

(54) **CABIN SUSPENSION SYSTEM**

(71) Applicant: Deere & Company, Moline, IL 61265 (US)
(72) Inventor: Valkama, Peetu, 68163 Mannheim (DE)
(74) Representative: Lavall, Christian Henner

(57) **Abstract**

The invention claims a cabin suspension system, adapted to be used in a forestry vehicle, comprising an operator cabin 10, adapted to control the forest vehicle, spring dampers 20, mountable between the operator cabin 10 and a vehicle frame 30, magnetorheological dampers 40, mountable between the operator cabin 10 and a vehicle frame 30, sensors 50, adapted to detect velocity and/or acceleration and/or movement of the cabin 10, of the vehicle frame 30 and a dampening coefficient of the magnetorheological dampers 40, and a controlling unit.

## Description

The invention is a cabin suspension system for a forestry vehicle, concerning an operator cabin and the vehicle frame.

Suspension systems are commonly used to control and reduce the movement between at least two separate parts within a system, such as wheels and the chassis of a vehicle or the cabin and the seat of a vehicle. Usually, these systems comprise dampers between the different components to reduce the conduction of movement of one part to the other or at least to dampen the transfer of vibrations. Such dampers are usually spring dampers, so that the dampening behavior is only adjustable by influencing the spring rate of the spring dampers. The spring rate can be influenced during production by the selected material, the thickness, the kind of spring, such as a coil spring. Later adjustment may include to mechanically reduce the spring length.

Forest terrain is uneven and does usually not form a homogeneous surface. It comprises terrain with different density, stones, rocks, dents and holes or tree stumps. Forestry terrain is generally off-road terrain, so that the area is additionally strongly influenced by rain, snow and gravel. In these conditions a forestry vehicle, such as a harvester or forwarder, must comprise a suspension system that can cope with a large travel length for the dampening and with different stiffness of the dampers. The terrain and the movement of the vehicle results in long, slow but also short and fast movements of the vehicle. These different requirements usually lead to a complex suspension system of the vehicle and the wheelbase. To further improve shock and movement absorption from the operator perspective, an additional suspension is provided between the seat and the cabin of the operator. These systems must usually be compact because of the available space within the cabin.

The present invention is aimed to further improve operator comfort and to improve safe drivability of forestry vehicles.

The invention concerns a cabin suspension system, adapted to be used in a forestry vehicle, comprising an operator cabin, adapted to control the forest vehicle, spring dampers, mountable between the operator cabin and a vehicle frame, magnetorheological dampers, mountable between the operator cabin and a vehicle frame, sensors, adapted to detect velocity and/or acceleration and/or movement of the cabin, of the magnetorheological dampers and of the vehicle frame, a controlling unit adapted for receiving and evaluating the sensor data, wherein the spring dampers and the magnetorheological dampers are adapted for acting in parallel between the vehicle frame and the operator cabin, and the controlling unit is adapted to monitor and regulate the magnetorheological dampers so that movement, velocity and acceleration of the operator cabin are controlled within selectable parameters.

The suspension system allows to reduce and avoid large vibration or swinging movement which would be otherwise transferred to the cabin, the operator seat, and the operator. As the forestry vehicle traverses over forest land, the cabin movement is reduced by the shock absorbing behavior of the spring dampers and the magnetorheological dampers. Large and slow movements of the vehicle chassis can be absorbed by a large travel length of the dampers and by a lower dampening factor of the magnetorheological damper, wherein small bumps and vibration are to be reduced by fast travel of the dampers and a high dampening factor of the magnetorheological dampers. Another aspect is reducing the movement of the cabin during working with the forestry vehicle, especially during felling or harvesting operation which usually includes the operation of a crane and harvesting head, as well as during loading of logs on the forestry vehicle. Due to load increases the vehicle chassis undergoes movement which results in movement of the cabin and the operator seat. Due to these movements the operator has to ensure safe operation and need special care when using control surfaces, so as not to overreact on these controls which can lead to mishandling of the crane or the vehicle.

Due to the present invention the operator always experiences less vibration and shock during the operation of the cabin. This leads to less stress of the operator and less fatigue. The vehicle and the cabin can be safely operated, and work safety is improved.

In another embodiment the cabin comprises a linkage, so that the cabin movement is guided in the angular and vertical direction.

The linkage provides a determined movement of the cabin due to the movement of the dampers and keeps the cabin in an upright position. Forces on the cabin, that are created due to movement are safely transferred to the vehicle and in parallel to the suspension system.

In a further embodiment the system is adapted to comprise a roll over protection system, that protects the cabin in case of a roll over situation of the vehicle.

A roll over situation is created by a roll over movement of the cabin. This can happen due to a roll over of the vehicle due to wrong operation or unsafe ground connection. In such a case the cabin is safely restrained by the vehicle chassis and prevented to be disconnected. A failsafe connection of the cabin and the chassis is important to prevent the cabin getting under the chassis in an uncontrolled movement and being integrally damaged by the chassis weight. This improves the safety of the operator in case of a roll over event.

By another embodiment the magnetorheological dampers and the spring dampers have a travel length of at least 5 up to 15 cm, more specific at least 8 to 12 cm, mostly preferred 9 to 11 cm.

In experimental evaluation of an optimum travel length for a forestry vehicle these travel lengths have shown the best results. The parameters allow for a wide range of application due to larger and smaller holes or dents in the forest ground and to enable improved performance during the loading or harvesting operation of the forestry vehicle. While driving operation usually needs longer travel lengths due to larger uneven forest area, the operation requires smaller travel length with a higher travel speed.

In another embodiment the parameters of the magnetorheological dampers and the spring dampers enable an angular movement of the cabin in relation to the vehicle frame of 5 to 2 degrees, preferred 4 to 3 degrees.

The angular movement of the cabin in relation to the ground or vehicle chassis enables to reduce movement of the cabin due to bumps in the forest area. Also, this improves shock or vibration behavior in that angular movement due to crane operation is occurring. By reduced swinging of the cabin related to crane operation, the operation of the vehicle can be improved, and the operator is less exposed to vibration and shock.

By a further embodiment the roll over protection system enables transfer of forces from the cabin to the vehicle chassis during a roll over event.

The roll over protection system provides a stable and strong connection of the cabin with the vehicle chassis. This system can be realized by large bolts being movably connected to the vehicle cassis or by complementary steel bar connections between the cabin and the vehicle chassis. In case of a roll over situation, the suspension system might be damaged and deformed, so that the roll over protection system maintains the connection of the cabin and the vehicle chassis. This ensures that the cabin is not separated from the vehicle chassis and prevents that the cabin further comes under the vehicle chassis and is integrally damaged. The roll over protection system provides a deformation protected space for the operator as the cabin is also mechanically enforced to endure large forces during a rollover event.

In another embodiment the controlling unit controls power supply to the magnetorheological dampers so that the dampening coefficient of the magnetorheological dampers is adapted according to the measured sensor data.

In case of a slow movement detected by the sensors, supposedly in connection with a long amplitude, the controlling unit will supply electric current to the magnetorheological dampers, so that the dampening coefficient, usually referred to as C, will establish in a lower value range, so that the swinging behavior is resulting in a softer dampening of the suspension system. It is also possible to adapt C during the swinging so that at an early stage, C has a lower value and is increased during the dampening movement, so as to reduce a repeating swinging behavior of the cabin.

In case of steep and fast acceleration measured by the sensors, C can be adjusted initially with a high value, so as to stiffen the suspension system and may further be reduced, so as to realize a soft dampening of the cabin.

The invention will further be described by the enclosed figures. Therein
- Figure 1: depicts a forestry vehicle;
- Figure 2: shows an embodiment of the invention in a side view;
- Figure 3: depicts an embodiment of the invention in a front view.

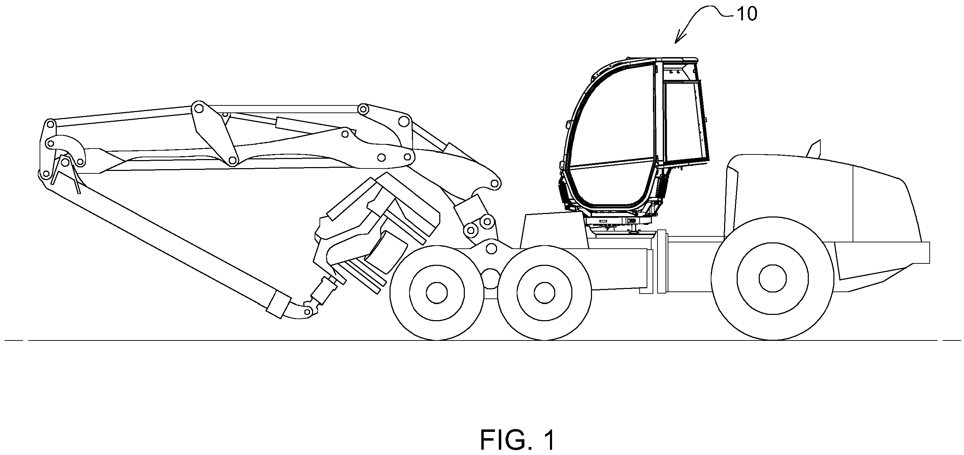

Figure 1 show a forestry vehicle with an operator cabin 10. The vehicle comprises of a front and rear chassis which are rotatably connected. The front chassis usually carries the operator cabin 10 and a crane. The rear chassis carries the engine and power components. The operator cabin 10 is movably connected to the front chassis, so that the cabin 10 can rotate around a vertical axis and is able to be angled towards the ground to allow an upright operator position when the vehicle is positioned on slopes or generally steep off-road terrain.

The vehicle is used in off-road applications, moving over uneven ground with an irregular surface. Forest ground usually comprises of roots, rocks, hills, so that movement of the vehicle results in swinging movement of the vehicle in all directions. Bumpy terrain can also lead to larger amplitude of vibration and stronger movement.

The crane can be used to operate a harvesting head, for felling and cutting trees into logs. The operation of the crane involves grabbing a tree, cutting of the stem, bringing the tree in a horizontal orientation, so that the stem can be cut into pieces. All these operations involve different tasks with the crane and result in a change of the temporary center of gravity of the vehicle. These changes lead to tilt movement and swinging of the vehicle in a variable amount and at various times.

In another example, not shown here, a forwarder is used to transport the log pieces out of the forest area to the closest road system. The vehicle comprises two chassis parts with the operator cabin being on the front chassis and a load bunk being on a rear chassis. The vehicle comprises a crane for grabbing and loading the logs on the load space or bunk. The loading and unloading involves various changes to the center of gravity and lead to excitation, tilt movement and swinging movement of the vehicle.

The invention is therefore used to reduce all movements of the operator cabin that are transferred from the chassis to the cabin. With less movement and vibration, the operator is supported in safely controlling the vehicle. The operator is less exposed to the shocks so that operator fatigue and stress is also reduced resulting in better work environment.

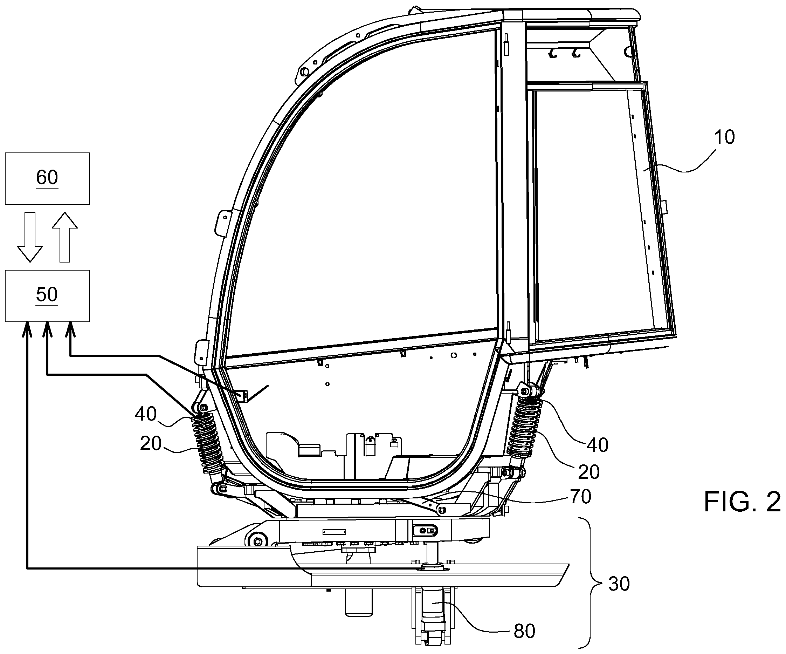

Figure 2 shows an embodiment in a side view. The cabin suspension system is mainly integrated in the cabin 10. The cabin 10 usually comprises doors for entering and front, rear and side windows. Inside the cabin 10, the operator uses control surfaces to control the operation of the vehicle. Below the cabin 10 are linkages 70, to enable a movable and rotatable connection to the chassis 30. The linkages 70 do not carry the weight of the cabin 10 but provide a guidance for the movement of the cabin 10 relative to the chassis 30.

The cabin 10 is further held with spring dampers 20 and magnetorheological dampers 40. The spring dampers 20 surround the magnetorheological dampers 40, but can also be provided in another manner, to have both kinds acting in parallel.

The spring dampers 20 have a fixed spring rate and a fixed dampening coefficient C. The magnetorheological dampers 40 allow the manipulation of the dampening coefficient C by setting a provided current to different levels. All dampers 20, 40 are provided at the front and rear of the cabin 10, preferably at all four corners. It is also possible to provide the dampers 20, 40 in different sizes, so that a reduced number of dampers 20, 40 can be provided. Such a setup could have to smaller spring dampers 20 and magnetorheological dampers 40 in the front, and one set of larger dampers in the back of the cabin 10.

The cabin 10 is also provided with sensors 50 which provide a feedback measurement of the movement of the cabin 10, such as linear and angular velocity and acceleration. The embodiment encloses one sensor 50 in the cabin 10, it is also possible to have multiple sensors 50 distributed in the cabin 10, such as in the front area and rear area of the cabin 10. This allows to measure the values with more accuracy.

The cabin 10 is placed and connected on the vehicle chassis 30. In the present embodiment, the vehicle chassis 30 comprises of a connection platform and a roll over protection system 80. The roll over protection system provides a pin, which limits the movement of the cabin in case of a roll over of the vehicle. More so the roll over protection system prevents the cabin 10 from separating from the vehicle chassis 30. Another sensor 50 is provided on the vehicle chassis 30 to measure linear and angular velocity or acceleration.

Another sensor of provided on the magnetorheological dampers 40. This sensor provides the angular and linear movement of the dampers 40, so that a feedback loop is created with the control unit 60. Control unit 60 is connected to all established sensors 50. The sensors 50 provide the local acceleration, velocity and movement. The control unit processes the value data and determines a localized damping coefficient C for the magnetorheological dampers 40. In a next step, the control unit 60 sets a current resulting from the calculations and transmits the current to the magnetorheological dampers 40 so that the dampening coefficient C is adjusted. In response the dampers 40 are providing an optimized dampening behavior for the situation of the vehicle and the movement of the cabin 10 to establish less movement and swinging of the operator.

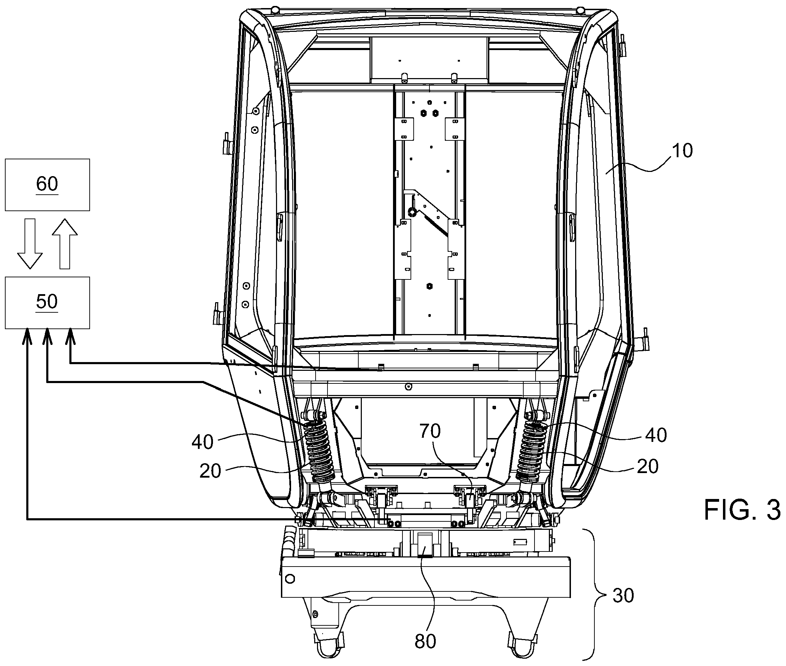

Figure 3 shows an embodiment in a front view of the cabin 10. Figure 3 corresponds to Figure 2 in that all features are disclosed in the front view. In addition to Figure 2 it is shown that linkages 70 are also provided in a front and rear part of the cabin 10 to provide support on the vehicle chassis 30. Spring dampers 20 and magnetorheological dampers 40 are movably attached in a front section of the cabin 10 and the vehicle chassis 30 so that these can extend and compress without strain or bending. The Roll over protection system 80 is provided under the cabin on the vehicle chassis 30.

The sensors 50 are shown to be placed on the cabin 10 in a central area, yet, these can be placed also in a front and back area of the cabin, so as to receive multiple values for the control unit 60. Sensors 50 are also placed in front of the cabin on the chassis 30. These as well can be place on multiple area on the chassis 30 so that more data is available for detecting the cabin 10 and chassis 30 movement and to control the magnetorheological dampers 40. The sensors 40 for the dampers 40 can be provided on one damper 40 alone or on multiple or all magnetorheological dampers 40. This enables a more accurate controllability of the dampening of the cabin 10.

The control unit 60 can be provided in the cabin 10, it may also be placed outside the cabin 10 or even on the chassis 30 to allow maintenance access from outside the vehicle. The control unit 60 is connected to the vehicle control unit so as to be controllable via the vehicle control surfaces, such as a touch panel or keyboard. The visualization is available by a screen for the operator. The operator can further make adjustments to the responsiveness of the suspension control system, so as to select the stiffness of the dampening control. This influences the control parameters of the dampening. The operator can also set the suspension control to automatic mode which provides a presetting for the suspension control for a wide range of terrain and work modes. The control unit 60 may be freely programmable to enable nonlinear behavior of the magnetorheological dampers 50. This would allow to change the dampening parameter during compression so as to realize a higher coefficient C at the beginning of a movement, which then further increases or the opposite so as to enable a unique and comfortable dampening behavior.

The suspension system is enabled by a controllable dampening coefficient C which avoid the provision of cameras so as to detect the terrain condition. The invention is highly adaptable and provides a suspension which has a low maintenance requirement. The avoidance of cameras which are susceptible to failure due to high vibration and the off road environment enable the use of the suspension in all conditions and temperatures.

## Claims

1. Cabin suspension system, adapted to be used in a forestry vehicle, comprising
an operator cabin (10), adapted to control the forest vehicle,
spring dampers (20), mountable between the operator cabin (10) and a vehicle frame (30),
magnetorheological dampers (40), mountable between the operator cabin (10) and the vehicle frame (30),
sensors (50), adapted to detect velocity and/or acceleration and/or movement of the cabin (10), of the vehicle frame (30) and a dampening coefficient of the magnetorheological dampers (40),
a controlling unit (60) adapted for receiving and evaluating the sensor data,
wherein the spring dampers (20) and the magnetorheological dampers (40) are adapted for acting in parallel between the vehicle frame (30) and the operator cabin (10), and
the controlling unit (60) is adapted to monitor and regulate parameters of the magnetorheological dampers (40) so that movement, velocity or acceleration of the operator cabin (10) are controlled within selectable parameters.

2. Cabin suspension system according to claim 1, wherein
the cabin comprises a linkage (70), so that the cabin movement is guided in the angular and vertical direction.

3. Cabin suspension system according to any of the former claims, wherein
the system is adapted to comprise a roll over protection system (80), that protects the cabin in case of a roll over situation of the vehicle.

4. Cabin suspension system according to any of the former claims, wherein the magnetorheological dampers and the spring dampers have a travel length of at least 5 up to 15 cm, more specific at least 8 to 12 cm, mostly preferred 9 to 11 cm.

5. Cabin suspension system according to any of the former claims, wherein the parameters of the magnetorheological dampers and the spring dampers enable an angular movement of the cabin in relation to the vehicle frame of 5 to 2 degrees, preferred 4 to 3 degrees.

6. Cabin suspension system according to any of the former claims, wherein
the roll over protection system enables transfer of forces from the cabin to the vehicle chassis during a roll over event.

7. Cabin suspension system according to any of the former claims, wherein the controlling unit controls power supply to the magnetorheological dampers so that the dampening coefficient of the magnetorheological dampers is adapted according to the measured sensor data.
